# EUROPÄISCHE PATENTANMELDUNG

(11) **EP 0 905 431 A2**
(43) Veröffentlichungstag der Anmeldung: **31.03.1999**
(21) Anmeldenummer: 98117517.7
(22) Anmeldetag: 15.09.1998
(51) Int. Cl.: F16L 37/12

(54) **Kupplungseinrichtung**

(30) Priorität: 30.09.1997 DE 19743065; 21.03.1998 DE 19812544
(71) Anmelder: Aeroquip-Vickers International GmbH, 76532 Baden-Baden (DE)
(72) Erfinder: Luft, Thomas, 76474 Au am Rhein (DE)
(74) Vertreter: Gleiss, Alf-Olav, Dr.jur. Dipl.-Ing.

(57) **Zusammenfassung**

Die Erfindung betrifft eine Kupplungseinrichtung zur Verbindung zweier vorzugsweise rohrförmiger Elemente, vorzugsweise eines Schlauchs mit einem Rohr, mit einem männlichen und einem weiblichen Kupplungselement (3;5), die ineinandersteckbar ausgebildet und mittels eines aufweitbaren Sicherungsrings (33) verriegelbar sind, und einer axial verlagerbar angeordneten Löseeinrichtung (35), die zum Lösen der Verriegelung mit dem Sicherungsring (33) zusammenwirkt. Die Erfindung zeichnet sich dadurch aus, daß der Löseeinrichtung (35) ein Indikatorelement (49*'*;65*'*;77*'*) zugeordnet ist, das eine Verbindung der beiden Kupplungselemente (3,5) anzeigt.

## Beschreibung

Die Erfindung betrifft eine Kupplungseinrichtung zur Verbindung zweier vorzugsweise rohrförmiger Elemente, vorzugsweise eines Schlauchs und/oder eines Rohrs, mit einem männlichen und einem weiblichen Kupplungselement, die ineinander steckbar ausgebildet und mittels eines aufweitbaren Sicherungsrings verriegelbar sind, und einer axial verlagerbar angeordneten Löseeinrichtung, die zum Lösen der Verriegelung mit dem Sicherungsring zusammenwirkt.

Eine derartige Kupplungseinrichtung ist aus der Druckschrift US 5,553,895 bekannt. Bei dieser darin beschriebenen Kupplungseinrichtung ist jedoch nachteilig, daß eine einwandfreie Verbindung beziehungsweise ein korrekt gekuppelter Zustand der beiden Kupplungselemente nicht in allen Fällen gewährleistet ist.

Die Aufgabe der vorliegenden Erfindung besteht deshalb darin, eine Kupplungseinrichtung vorzusehen, die eine optische und/oder haptische Kontrolle einer einwandfreien Verbindung der beiden Kupplungselemente zuläßt, ohne großen baulichen Aufwand zu betreiben.

Die Aufgabe der Erfindung wird durch eine Kupplungseinrichtung gelöst, die die Merkmale des Anspruchs 1 aufweist. Dadurch, daß der Löseeinrichtung ein Indikatorelement zugeordnet ist, ist mit einfachen baulichen Maßnahmen eine Kontrolle möglich. Der Benutzer hat somit beim Kuppeln der beiden Elemente sofort eine Anzeige, ob die Kupplungselemente korrekt gekuppelt sind. Durch die funktionelle Verbindung des Indikatorelements mit der Löseeinrichtung wird eine sehr kostengünstige und einfache Lösung erzielt, bei der sich die Anzahl der zusätzlichen Bauelemente auf ein Minimum beschränkt.

In einer vorteilhaften Weiterbildung der Erfindung umfaßt die Löseeinrichtung ein erstes und vorzugsweise ein zweites Dichtelement, wobei das erste Dichtelement dem weiblichen und das zweite Dichtelement dem männlichen Kupplungselement zugeordnet ist. Der Vorteil liegt darin, daß ein Eindringen von Schmutz in den Verbindungsbereich der beiden Kupplungselemente verhindert wird. Es läßt sich dadurch die Verbindungs- und Lösesicherheit erhöhen. Darüber hinaus schafft man durch die Elastizität des ersten Dichtelements zusammen mit einem als Rastnase wirkenden in eine Nut eingreifenden Vorsprung eine Möglichkeit, die Löseeinrichtung exakt zu Positionieren und das Dichtelement an das weibliche Kupplungselement zu ziehen.

In einer vorteilhaften Weiterbildung der Erfindung liegt das Dichtelement -im verbundenen Zustand der beiden Kupplungselemente- an einer stirnseitigen Fläche des weiblichen Kupplungselements dichtend an.

In einer weiteren vorteilhaften Weiterbildung der Erfindung ist das Indikatorelement als Indikatorstift ausgebildet, der von der Löseeinrichtung axial verlagerbar gehalten ist, derart, daß der Indikatorstift beim Verbinden der beiden Kupplungselemente an der stirnseitigen Fläche des weiblichen Kupplungselements anschlägt und axial verlagert wird. Hierbei handelt es sich um eine sehr einfache Löseeinrichtung, die kostengünstig herstellbar ist. Lediglich ein Indikatorstift sowie eine in die Löseeinrichtung eingebrachte Durchgangsbohrung sind notwendig. Bei Bedarf lassen sich selbstverständlich auch mehrere Indikatorstifte in Umfangsrichtung verteilt vorsehen.

In einer vorteilhaften Weiterbildung der Erfindung ist das Indikatorelement als Indikatorring ausgebildet, der auf dem männlichen Kupplungselement in einer definierten Position angeordnet ist, aus der der Indikatorring beim Kupplungsvorgang in axialer Richtung verlagert wird. Auch hier ist lediglich eine einfache bauliche Maßnahme zu treffen, um ein Indikatorelement vorzusehen.

In einer vorteilhaften Weiterbildung der Erfindung weist das männliche Kupplungselement eine Nut auf, in der der aufweitbar ausgebildete Indikatorring in seiner definierten Position liegt. Der Vorteil hierbei liegt darin, daß neben dem als Indikatorelement dienenden Indikatorring die Ringnut als weiteres Indikatorelement zur Verfügung steht. Ist diese Nut beispielsweise von außen sichtbar oder fühlbar, so läßt das auf eine fehlerhafte Verbindung schließen.

Ein Ausführungsbeispiel der erfindungsgemäßen Kupplungseinrichtung zeichnet sich dadurch aus, daß das Indikatorelement durch eine an der stirnseitigen Fläche des weiblichen Kupplungselements vorgesehene Markierung gebildet ist, die -im verbundenen Zustand der beiden Kupplungselement- von dem Dichtelement zumindest bereichsweise abgedeckt ist. Bei den vorstehend beschriebenen Varianten des Indikatorelements (Indikatorring beziehungsweise Indikatorstift) erfolgt ein Anzeigen des korrekt gekuppelten Zustands der Kupplungselemente dadurch, daß das Indikatorelement aus seiner definierten Position verlagert wird. Damit wird der korrekt gekuppelte Zustand quasi durch 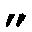 optische Auffälligkeiten" angezeigt. Bei dem Ausführungsbeispiel mit der Markierung wird jedoch der ordnungsgemäß gekuppelte Zustand dadurch angezeigt, daß das Indikatorelement nicht oder nur teilweise sichtbar ist.

In einer Weiterbildung der Erfindung ist vorgesehen, daß die Markierung eine Farbmarkierung ist, die bezüglich des Dichtelements und/oder der stirnseitigen Fläche farblich abweicht. Damit ist es leicht erkennbar, ob der ordnungsgemäß gekuppelte Zustand der Kupplungselement vorliegt.

Eine bevorzugte Ausführungsform zeichnet sich dadurch aus, daß die Markierung als zu einem Innenraum des weiblichen Kupplungselements konzentrisch liegender Ring ausgebildet ist. Der Ring wird beim gekuppelten Zustand der Kupplungselemente vom Dichtelement vorzugsweise vollständig abgedeckt, so daß von einem Benutzer aus jeder Blickrichtung erkannt werden kann, ob der korrekt gekuppelte Zustand vorliegt.

Ein bevorzugtes Ausführungsbeispiel zeichnet sich dadurch aus, daß die Markierung durch eine Einlage gebildet ist, die in einer auf der stirnseitigen Fläche mündenden Nut angeordnet beziehungsweise eingelegt ist. Diese Einlage ist besonders dauerhaft anbringbar, so daß der korrekt gekuppelte Zustand auch nach vielen Kupplungsvorgängen noch sicher angezeigt wird.

In bevorzugter Ausführungsform ist vorgesehen, daß die Nut als Ringnut ausgebildet ist, in die die vorzugsweise ringförmige Einlage einlegbar ist.

In einer Weiterbildung der Erfindung ist vorgesehen, daß die Einlage als Kunststoffteil realisiert ist. Dieses Kunststoffteil ist besonders preisgünstig und einfach herstellbar und kann beispielsweise in die Nut eingeklebt werden.

In einer vorteilhaften Weiterbildung der Erfindung weist die Löseeinrichtung einen ersten und einen zweiten Längsabschnitt auf, wobei der Außendurchmesser des ersten Längsabschnitts größer und der Außendurchmesser des zweiten Längsabschnitts kleiner als der Innendurchmesser des weiblichen Kupplungselements ist.

Weitere Ausgestaltungen ergeben sich aus den Unteransprüchen.

Die vorgenannten Weiterbildungen der Erfindung lassen sich beliebig miteinander kombinieren, ohne den Umfang der Erfindung zu verlassen.

Die Erfindung wird nun anhand von Ausführungsbeispielen mit Bezug auf die Zeichnung näher erläutert. Dabei zeigen:
- Figuren 1a, 1b: eine im Längsschnitt schematisch dargestellte Kupplungseinrichtung in zwei unterschiedlichen Kupplungsstellungen,
- Figur 2: eine im Längsschnitt schematisch dargestellte Kupplungsvorrichtung gemäß einem zweiten Ausführungsbeispiel,
- Figur 3: ausschnittweise ein weiteres Ausführungsbeispiel einer Kupplungseinrichtung, wobei der ungekuppelte Zustand vorliegt, und
- Figur 4: ausschnittweise die Kupplungseinrichtung gemäß Figur 3, wobei der gekuppelte Zustand dargestellt ist.

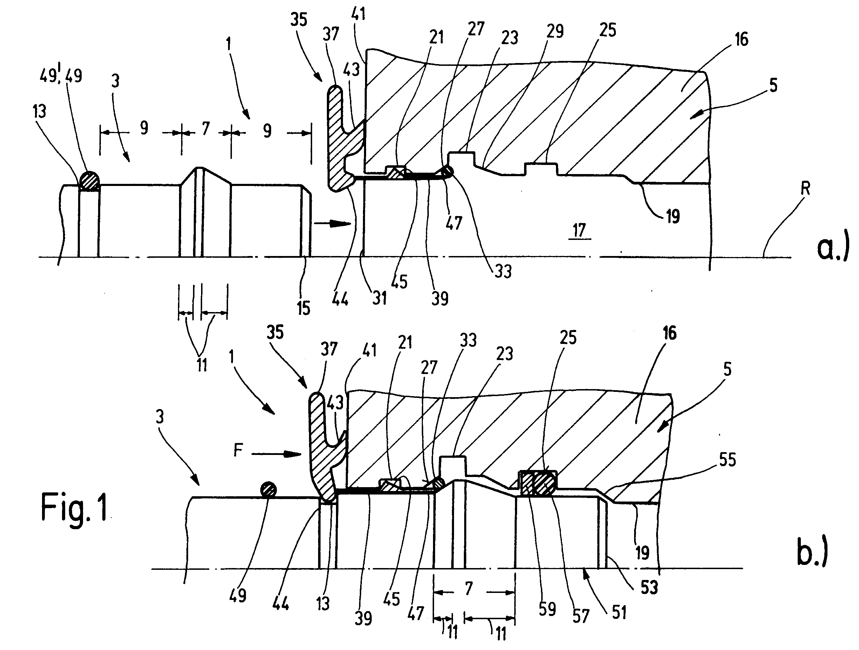

In Figur 1a ist eine Kupplungseinrichtung 1 dargestellt. Der Übersichtlichkeit wegen ist lediglich der für die Erfindung wesentliche Teil zu erkennen. Die Kupplungseinrichtung 1 umfaßt ein männliches Kupplungselement 3 und ein weibliches Kupplungselement 5. Bei beiden Elementen handelt es sich -im vorliegenden Ausführungsbeispiel- um rotationssymmetrische Bauteile, so daß zur Vereinfachung der Darstellung lediglich die bezüglich der Rotationsachse R obere Hälfte dargestellt ist. Selbstverständlich sind auch andere Bauteilformen denkbar.

Das im folgenden als Nippel bezeichnete männliche Kupplungselement 3 ist rohrförmig ausgebildet und läßt beispielsweise mittels einer Schraubverbindung oder Armatur den Anschluß eines Rohrs oder eines Schlauchs zu. Der Nippel 3 weist einen Längsabschnitt 7 auf, der gegenüber den benachbarten Längsabschnitten 9 einen größeren Außendurchmesser aufweist. Die Zunahme des Außendurchmessers erfolgt stetig, so daß konische Längsabschnitte 11 gebildet werden.

Der Nippel 3 weist eine Ringnut 13 auf, die in einem Längsabschnitt vorgesehen ist, der -ausgehend vom freien Ende 15 des Nippels 3- dem Längsabschnitt 7 folgt.

Das im folgenden als Muffe bezeichnete weibliche Kupplungselement 5 ist -im vorliegenden Ausführungsbeispiel- ebenfalls rohrförmig ausgebildet und läßt den Anschluß beispielsweise eines Rohrs oder eines Schlauchs zu. Selbstverständlich ist es auch denkbar, das weibliche Kupplungselement 5 in einem Anschlußblock zum Direktanschluß des Nippels 3 zu integrieren. Beispielhaft wird nachfolgend jedoch von einem rohrförmigen weiblichen Kupplungselement ausgegangen. Der entsprechende Anschlußbereich ist in der Figur 1 nicht dargestellt. Eine Wandung 16 der Muffe 5 umschließt einen im Querschnitt kreisförmigen Innenraum 17, der zur Aufnahme eines Längsabschnitts des Nippels 3 ausgebildet ist. Mit Hilfe des Nippels 3 und der Muffe 5 soll eine dichte Verbindung zwischen den an den beiden Elementen angeschlossenen Rohren beziehungsweise Schläuchen hergestellt werden.

In einer Innenwandung 19 der Muffe 5 sind in Längsrichtung beabstandet zueinander angeordnete Nuten 21, 23, 25 vorgesehen, wobei die Abstände (Radien) der drei Nuten 21, 23, 25 zur Rotationsachse R unterschiedlich sind.

Die in der Figur 1 mittlere Nut 23 weist zwei gegenüber der Rotationsachse R schräg verlaufende Flächen 27 und 29 auf, wobei die Fläche 27 dem Ende 31 der Muffe 5 zugewandt ist beziehungsweise die Fläche 27 näher am Ende 31 als die Fläche 29 liegt.

Im Bereich der mittleren Nut 23 ist ein Sicherungsring 33 vorgesehen, der -wie in Figur 1a zu erkennen- an der Fläche 27 anliegt. Der Sicherungsring 33 ist bezüglich seines Durchmessers aufweitbar ausgebildet. Vorzugsweise wird ein an einer Stelle durchtrennter als Sprengring bezeichneter Sicherungsring 33 verwendet. Der Durchmesser dieses Sicherungsrings 33 ist etwas größer gewählt als der Innendurchmesser des Innenraums 17.

Die Kupplungseinrichtung 1 weist darüber hinaus eine Löseeinrichtung 35 auf, die einen ringförmigen Längsabschnitt 37 und einen rohrförmigen Längsabschnitt 39 besitzt. Der im folgenden als Lösegriff bezeichnete ringförmige Längsabschnitt 37 weist einen Innendurchmesser auf, der in etwa dem Außendurchmesser der Nut 13 des Nippels 3 entspricht. Der Außendurchmesser des Lösegriffs 37 kann beliebig gewählt werden, wobei jedoch gewährleistet sein muß, daß der Lösegriff 37 manuell bedienbar ist.

An der der Stirnseite 41 der Muffe 5 zugewandten Seite des Lösegriffs 37 ist eine ringförmige axiale Dichtungslippe 43 vorgesehen. Die Dichtungslippe 43 liegt in radialer Richtung gesehen etwa in der Mitte zwischen innerem und äußerem Rand des Lösegriffs 37.

An der dem Nippel 3 zugewandten Seite des Lösegriffs 37 ist eine weitere radiale Dichtung 44 vorgesehen, die -im eingesteckten Zustand von Muffe 5 und Nippel 3- mit der Nut 13 zusammenwirkt.

Sowohl die Dichtungslippe 43 als auch die Dichtung 44 sind vorzugsweise aus einem Weichkautschuk gefertigt.

Der im folgenden als Betätigungselement bezeichnete rohrförmige Längsabschnitt 39 ist mit dem Lösegriff 37 verbunden, wobei die Verbindungsstelle in einem inneren, das heißt der Rotationsachse R zugewandten radialen Bereich des Lösegriffs 37 liegt. Die axiale Länge des Betätigungselements 39 ist kleiner als der axiale Abstand des Sicherungsrings 33 zu der Stirnseite 41 der Muffe 5. An der Außenseite des Betätigungselements 39 ist ein in Umfangsrichtung sich erstreckender als Rastnase wirkender Vorsprung 45 vorgesehen, dessen Höhe geringer ist als die Tiefe der Nut 21 in der Muffe 5. Der axiale Abstand des Vorsprungs 45 zum Lösegriff 37 ist etwas größer gewählt als der Abstand der Nut 21 der Muffe 5 zu der Stirnseite 41. Die der Stirnseite 41 zugewandte Fläche des Vorsprungs 45 verläuft gegenüber der Achse R in einem steilen Winkel während die andere Fläche bezüglich der Achse R in einem flachen Winkel verläuft. Damit wird erreicht, daß die Löseeinrichtung 35 in die Muffe 5 einfach einsteckbar, aber schwer lösbar ist.

Um ein Einstecken des Nippels 3 in die Muffe 5 zu ermöglichen, ist das Betätigungselement 39 in radialer Richtung aufweitbar ausgebildet, beispielsweise mittels in axialer Richtung verlaufender Schlitze.

In Figur 1a ist deutlich zu erkennen, daß die Löseeinrichtung 35 in die Muffe 5 eingesteckt ist. Das Betätigungselement 39 liegt hierbei nahezu vollständig im Innenraum 17, wobei der Vorsprung 45 in die Nut 21 der Muffe 5 eingreift. Das dem Lösegriff 37 abgewandte Ende 47 des Betätigungselements 39 grenzt unmittelbar an den Sicherungsring 33 an, ohne jedoch Kontakt mit dem Sicherungsring 33 zu haben. Der Außendurchmesser des Betätigungselements 39 ist so gewählt, daß dieses mit geringem radialen Spiel durch die Innenwandung 19 der Muffe 5 in axialer Richtung verlagerbar geführt ist. Die axiale Verlagerbarkeit wird begrenzt durch die axiale Ausdehnung der Nut 21. Die beiden Wandungen der Nut 21 dienen als Anschlagflächen für den Vorsprung 45, so daß ein Herausgleiten des Betätigungselements 39 aus dem Innenraum 17 verhindert wird. Gleichwohl soll eine axiale Verlagerbarkeit um eine definierte Strecke gewährleistet sein. Diese Strecke entspricht in etwa dem axialen Abstand des Sicherungsrings 33 zur Nut 23.

Im eingesteckten Zustand der Löseeinrichtung 35 in der Muffe 5 liegt der Lösegriff 37 im wesentlichen parallel zur Stirnseite 41 der Muffe 5, wobei die ein Dichtungselement bildende Dichtungslippe 43 an dieser Stirnseite 41 dichtend anliegt. Die Dichtungslippe 43 ist elastisch ausgebildet, so daß der Lösegriff 37 axial in Richtung der Stirnseite 41 gedrückt werden kann, wobei gleichzeitig auch das Betätigungselement 39 verlagert wird. Gleichzeitig sorgt die Dichtungslippe 43 aufgrund ihrer Elastizität dafür, daß der Vorsprung 45 gegen die der Stirnseite 41 zugewandte Wand der Nut 21 gedrückt wird. Es läßt sich auf diese Weise einerseits eine Positionierung des Betätigungselements 39 erreichen, andererseits wird bedingt durch eine Vorspannung die Dichtungslippe 43 gegen die Stirnseite 41 gedrückt.

Die Kupplungseinrichtung 1 weist darüber hinaus ein Indikatorelement 49*'* auf, das im vorliegenden Ausführungsbeispiel als bezüglich seines Durchmessers aufweitbarer Indikatorring 49 ausgebildet ist. Im Grundzustand liegt dieser Indikatorring 49 in der Nut 13 des Nippels 3. Der Innendurchmesser des Indikatorrings 49 entspricht somit also in etwa dem Außendurchmesser der Nut 13. Der Indikatorring 49 ist derart ausgebildet, daß er bei Aufbringen einer in axialer Richtung wirkenden Kraft aus der Nut 13 herausverlagert werden kann.

In Figur 1b ist die Kupplungseinrichtung 1 gemäß Figur 1a dargestellt, wobei gleiche Teile mit dem gleichen Bezugszeichen gekennzeichnet sind. Auf eine nochmalige Beschreibung dieser Teile wird deshalb verzichtet. Gegenüber der Darstellung gemäß Figur 1a sind in Figur 1b die beiden Kupplungselemente 3, 5 miteinander verbunden, so daß eine Fluidverbindung zwischen den am Nippel 3 angeschlossenen Rohr und dem an der Muffe 5 angeschlossenen Rohr erzielt wird.

Der Nippel 3 liegt mit einem Längs-Endabschnitt 51 im Innenraum 17 der Muffe 5. Dieser Längs-Endabschnitt 51 erstreckt sich vom Ende 53 des Nippels 3 im wesentlichen bis zu der Nut 13. An der Innenwandung 19 des Innenraums 17 ist eine konische Fläche 55 vorgesehen, die als Anschlag für den Nippel 3 dient und mit dessen Ende 53 zusammenwirkt. Dieser Anschlag soll verhindern, daß der Nippel 3 in axialer Richtung zu weit in den Innenraum 17 eingeschoben wird.

Der Sicherungsring 33 verhindert eine Verlagerung des Nippels 3 in entgegengesetzter Richtung, also aus dem Innenraum 17 heraus, indem dieser eine Klemmwirkung zwischen der Fläche 27 der Muffe 5 und der Fläche des konischen Längsabschnitts 11, der der Stirnseite 41 zugewandt ist, hervorruft. Damit ist der Nippel 3 fest, aber lösbar mit der Muffe 5 verbunden.

Zur Abdichtung der Verbindung ist in der Nut 25 ein O-Ring 57 vorgesehen, der den Spalt zwischen Muffe 5 und Nippel 3 abdichtet. Zur Abstützung des O-Rings 57 unter Druck ist in der Nut 25 des weiteren ein Stützring 59 angeordnet.

Beim Einstecken des Nippels 3 in die Muffe 5 gleitet die der Achse R zugewandte Fläche des Lösegriffs 37 über die äußere Mantelfläche des Nippels 3, wobei sie im eingesteckten Zustand in die Nut 13 einrastet. Zuvor jedoch drückt der Lösegriff 37 den Indikatorring 49 aus der Nut 13 heraus. Der dann frei verlagerbare Indikatorring 49 signalisiert, daß die Verbindung von Nippel 3 und Muffe 5 einwandfrei ist. Sollte der Indikatorring 49 nicht sichtbar sein, so läßt sich ebenfalls eine manuelle Prüfung vornehmen. Ertastet der Benutzer einen verlagerbaren Indikatorring 49 liegt eine einwandfreie Verbindung vor.

Mit Hilfe der Dichtungslippe 43 und dem in die Nut 13 einrastenden Lösegriff 37 beziehungsweise mit dessen ein Dichtungselement bildenden Dichtung 44 wird eine sehr gute Abdichtung gegen das Eindringen von Schmutz in den Innenraum 17 beziehungsweise in den Spaltbereich zwischen Muffe 5 und Nippel 3 erzielt.

Der Vorteil dieser Kupplungseinrichtung 1 ist darin zu sehen, daß mit einfachen Mitteln eine Löseeinrichtung 35 geschaffen wird, die zusätzlich den Innenraum abdichtet und des weiteren für die Anzeige einer einwandfreien Verbindung sorgt.

Zum Lösen des Nippels 3 von der Muffe 5 wird der Lösegriff 37 mit einer axialen in Richtung der Stirnseite 41 wirkenden Kraft F beaufschlagt. Diese Kraft bewirkt eine Verlagerung des Betätigungselements 39 in Richtung der Kraft F. Das Ende 47 des Betätigungselements 39 schiebt dabei den Sicherungsring 33 über die Fläche des konischen Längsabschnitts 11 bezüglich der Rotationsachse R schräg nach oben hinweg. Sobald der Sicherungsring 33 innerhalb der Nut 23 liegt, kann der Nippel 3 aus der Muffe 5 herausgezogen werden.

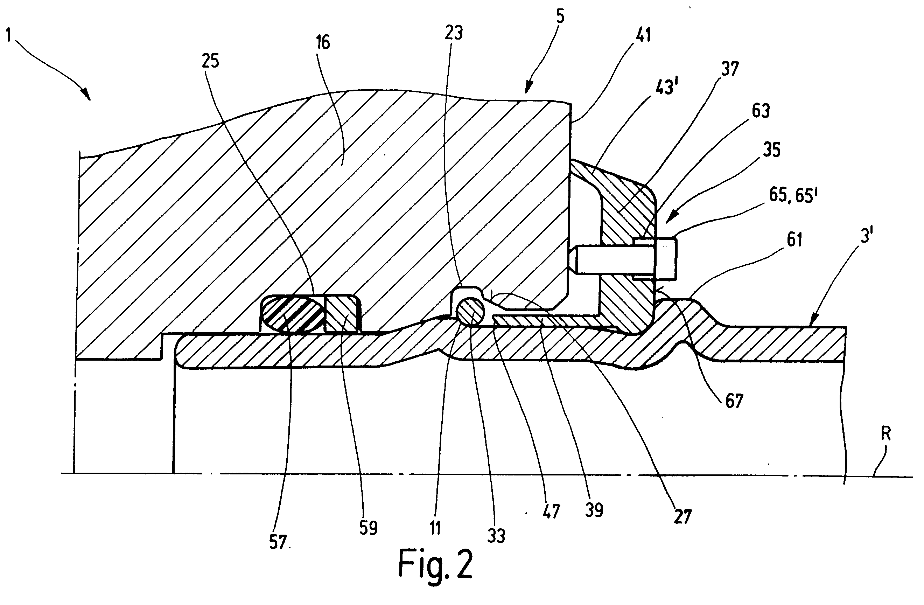

In Figur 2 ist ein weiteres Ausführungsbeispiel einer Kupplungseinrichtung 1 dargestellt. Mit dem Ausführungsbeispiel gemäß Figur 1 übereinstimmende Teile sind mit gleichen Bezugszeichen gekennzeichnet, so daß auf eine nochmalige Beschreibung dieser Teile verzichtet werden kann.

Die Verbindung von Muffe 5 und Nippel 3' erfolgt wiederum mittels des Sicherungsrings 33, der zwischen den beiden konischen Flächen 11 und 27 eine Klemmwirkung herbeiführt.

Im Gegensatz zu der Ausbildung des Nippels 3 gemäß Figur 1 weist der Nippel 3' der vorliegenden Ausführungsform einen Wulst 61 auf, der der axialen Abstützung der Löseeinrichtung 35 beim Einbringen des Nippels 3' in die Muffe 5 dient. Der Lösegriff 37 umfaßt wiederum eine Dichtungslippe 43', die gegenüber der Dichtungslippe 43 des ersten Ausführungsbeispiels am -in radialer Richtung gesehenäußeren Randbereich angebracht ist.

Der Lösegriff 37 weist eine Bohrung 63 auf, die in axialer Richtung verläuft und den Lösegriff vollständig durchdringt. In diese Bohrung ist ein Indikatorstift 65 verlagerbar eingebracht, der ein Indikatorelement 65*'* bildet. Die Länge des Indikatorstiftes 65 ist größer als der Abstand zwischen einer äußeren Stirnfläche 67 des Lösegriffs 37 und der Stirnseite 41 im verbundenen Zustand von Nippel 3' und Muffe 5. Selbstverständlich können auch mehrere in Umfangsrichtung verteilt angeordnete Indikatorstifte vorgesehen sein.

Beim Einstecken des Nippels 3' in die Muffe 5 schlägt das Ende des Indikatorstiftes 65 an der Stirnseite 41 an und wird beim weiteren Einschieben des Nippels 3' aus der Bohrung 63 herausgedrückt. Damit signalisiert ein gegenüber der Stirnfläche 67 hervorstehender Kopf des Indikatorstiftes 65 eine einwandfreie Verbindung von Nippel 3' und Muffe 5. Selbstverständlich läßt sich durch entsprechende Dimensionierung der einzelnen Teile auch erreichen, daß der Indikatorstift 65 im verbundenen Zustand von Nippel 3' und Muffe 5 vollständig aus der Bohrung 63 herausfällt.

Die Kupplungseinrichtung gemäß Figur 2 hat den Vorteil, daß die Löseeinrichtung 35 neben ihrer eigentlichen Funktion des Lösens der Verbindung zwei weitere Funktionen in einfacher Weise übernimmt, nämlich einerseits die Signalisierung einer einwandfreien Verbindung der beiden Kupplungselemente 3, 5 und andererseits die Abdichtung des Innenraums 17 gegen eindringenden Schmutz. Hierfür sind lediglich zwei zusätzliche Bauteile notwendig, nämlich der Indikatorstift 65 und die Dichtungslippe 43'.

Selbstverständlich ist es denkbar, das Betätigungselement 39 nicht rohrförmig, sondern lediglich aus in Umfangsrichtung beabstandet zueinander angeordneten Betätigungsarmen beziehungsweise Betätigungssegmenten auszubilden.

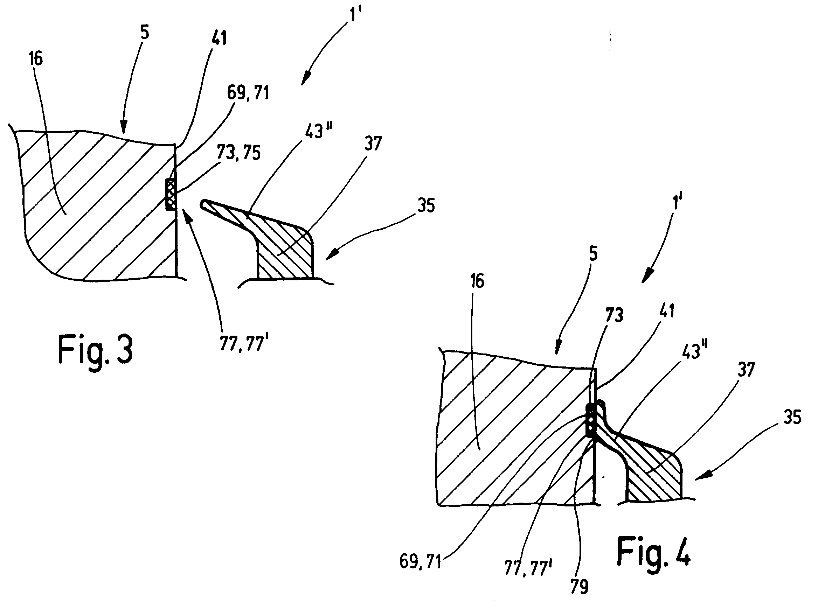

Figur 3 zeigt eine gegenüber dem Ausführungsbeispiel gemäß Figur 2 abgewandelte Kupplungseinrichtung 1*'*, die lediglich ausschnittweise in Schnittdarstellung wiedergegeben ist. Gleiche Teile -sofern dargestellt- wie in Figur 2 sind mit denselben Bezugszeichen versehen. Insofern wird auf deren nochmalige Beschreibung verzichtet. In der Stirnseite 41 der Muffe 5 ist eine Nut 69 eingebracht, die als umlaufende Nut beziehungsweise Ringnut 71 ausgebildet sein kann. In die Nut 69 beziehungsweise Ringnut 71 ist ein Teil 73 eingelegt, das als Kunststoffteil 75 realisierbar ist. Vorzugsweise weist dieses Teil 73 eine andere Farbe als die Stirnseite 41 und/oder eine Dichtungslippe 43*''* auf. Das Teil 73 bildet somit eine Markierung 77, die als Indikatorelement 77*'* dient. Die Markierung 77 beziehungsweise das Teil 73 beziehungsweise Kunststoffteil 75 ist vorzugsweise als Ring ausgebildet, der in die Ringnut 71 einlegbar beziehungsweise einsetzbar ist. Mithin wird eine Einlage gebildet, die vorzugsweise vollständig von der Nut 69 beziehungsweise Ringnut 71 aufgenommen wird und somit die Stirnfläche 41 nicht überragt.

Das Indikatorelement 77*'* beziehungsweise die Markierung 77 ist in dem in Figur 3 dargestellten, nicht gekuppelten beziehungsweise teilweise gekuppelten Zustand der Kupplungseinrichtung 1 sichtbar, da die Dichtungslippe 43*''* nicht auf der Stirnseite 41 aufliegt. In bevorzugter Ausführungsform ist die Dichtungslippe 43*''* gegenüber der Dichtungslippe 43*'* (Figur 2) etwas länger ausgebildet. Die Dichtungslippe 43*''* ist vorzugsweise aus einem elastischen Material, insbesondere Weichkautschuk, hergestellt.

In Figur 4 ist der korrekt gekuppulte Zustand der Kupplungseinrichtung 1*'* wiedergegeben. Beim Einstecken des Nippels 3*'* in die Muffe 5 trifft die Dichtungslippe 43*''* auf die Stirnseite 41. Dadurch, daß die Dichtungslippe 43*''* bezüglich der Stirnseite 41 unter einem Winkel verläuft, wird die Dichtungslippe 43*''* nach oben gebogen, und kommt auf der Stirnseite 41 beziehungsweise auf der Markierung 77 beziehungsweise auf dem Indikatorelement 77*'* mit ihrer Innenfläche 79 zu liegen. Die Länge der Dichtungslippe 43*''* ist vorzugsweise so bemessen, daß bei ordnungsgemäß gekuppelter Kupplungseinrichtung 1*'* ein vollständiges Abdecken der Markierung 77 erfolgt, da der Außendurchmesser der Dichtungslippe beziehungsweise des Lösegriffs 37 vergrößert wird. Dadurch kann eindeutig bestimmt werden, daß der korrekt gekuppelte Zustand vorliegt.

Selbstverständlich kann anstelle des Teils 73 beziehungsweise der Einlage und der Nut 69 beziehungsweise Ringnut 71 lediglich ein Farbauftrag auf der Stirnseite 41 vorgesehen sein, der demgemäß die Markierung 77 beziehungsweise das Indikatorelement 77*'* bildet. Die Farbmarkierung beziehungsweise das Teil 73 kann fluoreszierend ausgebildet sein oder fluoreszierende Mittel enthalten, so daß auch bei ungünstigen Lichtverhältnissen eine eindeutige und leicht abzulesende Kupplungsanzeige realisierbar ist.

Selbstverständlich ist es auch möglich, das im Zusammenhang mit den Figuren 3 und 4 beschriebene Indikatorelement 77*'* für die Kupplungseinrichtung 1 gemäß Figur 1a und b vorzusehen, so daß die Dichtungslippe 43 mit dem Indikatorelement 77*'* zusammenwirkt.

## Patentansprüche

1. Kupplungseinrichtung zur Verbindung zweier vorzugsweise rohrförmiger Elemente, vorzugsweise eines Schlauchs mit einem Rohr, mit einem männlichen (3) und einem weiblichen (5) Kupplungselement, die ineinander steckbar ausgebildet und mittels eines aufweitbaren Sicherungsrings (33) verriegelbar sind, und einer axial verlagerbar angeordneten Löseeinrichtung (35), die zum Lösen der Verriegelung mit dem Sicherungsring (33) zusammenwirkt, **dadurch gekennzeichnet**, daß der Löseeinrichtung (35) ein Indikatorelement (49*'*;65*'*;77*'*) zugeordnet ist, das eine Verbindung der beiden Kupplungselemente (3,5) anzeigt.

2. Kupplungseinrichtung nach Anspruch 1, **dadurch gekennzeichnet**, daß die Löseeinrichtung (35) ein dem weiblichen Kupplungselement (5) zugeordnetes Dichtelement (Dichtungslippe 43;43*'*;43*''*) umfaßt.

3. Kupplungseinrichtung nach Anspruch 2, **dadurch gekennzeichnet**, daß die Löseeinrichtung (35) ein weiteres dem männlichen Kupplungselement (3) zugeordnetes Dichtelement (Dichtung 44) umfaßt.

4. Kupplungseinrichtung nach Anspruch 2 oder 3, **dadurch gekennzeichnet**, daß das Dichtelement (43;43*'*;43*''*) -im verbundenen Zustand der beiden Kupplungselemente (3,5)- an einer stirnseitigen Fläche (41) des weiblichen Kupplungselements (5) dichtend anliegt.

5. Kupplungseinrichtung nach einem der vorhergehenden Ansprüche, **dadurch gekennzeichnet**, daß das Indikatorelement (65*'*) als zumindest ein Indikatorstift (65) ausgebildet ist, der von der Löseeinrichtung (35) axial verlagerbar gehalten ist, derart, daß der Indikatorstift (65) beim Verbinden der beiden Kupplungselemente (3,5) an der stirnseitigen Fläche (41) des weiblichen Kupplungselements (5) anschlägt und axial verlagert wird.

6. Kupplungseinrichtung nach einem der Ansprüche 1 bis 4, **dadurch gekennzeichnet**, daß das Indikatorelement (49*'*) als Indikatorring (49) ausgebildet ist, der auf dem männlichen Kupplungselement (3) in einer definierten Position angeordnet ist, derart, daß er beim Verbinden der beiden Kupplungselemente (3,5) mittels der Löseeinrichtung (35) aus der definierten Position axial verlagerbar ist.

7. Kupplungseinrichtung nach einem der Ansprüche 1 bis 4, **dadurch gekennzeichnet**, daß das Indikatorelement (77*'*) durch eine an der stirnseitigen Fläche (41) vorgesehene Markierung (77) gebildet ist, die -im verbundenen Zustand der beiden Kupplungselemente (3,5)- von dem Dichtelement (43;43*''*) zumindest bereichsweise abgedeckt ist.

8. Kupplungseinrichtung nach Anspruch 7, **dadurch gekennzeichnet**, daß die Markierung (77) eine Farbmarkierung ist, die bezüglich des Dichtelements (43;43*''*) und/oder der stirnseitigen Fläche (41) farblich abweicht.

9. Kupplungseinrichtung nach einem der Ansprüche 7 oder 8, **dadurch gekennzeichnet**, daß die Markierung (77) als zu einem Innenraum (17) des weiblichen Kupplungselements (5) konzentrisch liegender Ring ausgebildet ist.

10. Kupplungseinrichtung nach einem der Ansprüche 7 bis 9, **dadurch gekennzeichnet**, daß die Markierung (77) durch eine Einlage gebildet ist, die in einer auf der stirnseitigen Fläche (41) mündenden Nut (69) angeordnet ist.

11. Kupplungseinrichtung nach Anspruch 10, **dadurch gekennzeichnet**, daß die Nut (69) als Ringnut (71) ausgebildet ist.

12. Kupplungseinrichtung nach einem der Ansprüche 10 oder 11, **dadurch gekennzeichnet**, daß die Einlage als Kunststoffteil (75) realisiert ist.

13. Kupplungseinrichtung nach Anspruch 6, **dadurch gekennzeichnet**, daß das männliche Kupplungselement (3) eine Nut (13) aufweist, in der der aufweitbar ausgebildete Indikatorring (49) in seiner definierten Position liegt.

14. Kupplungseinrichtung nach Anspruch 3 und 13, **dadurch gekennzeichnet**, daß das Dichtelement (44) -im verbundenen Zustand der beiden Kupplungselemente (3,5)- radial dichtend an der Nut (13) anliegt.

15. Kupplungseinrichtung nach einem der vorhergehenden Ansprüche, **dadurch gekennzeichnet**, daß die Löseeinrichtung (35) einen ersten (37) und einen zweiten Längsabschnitt (39) aufweist, wobei der Außendurchmesser des ersten Längsabschnitts (37) größer und der Außendurchmesser des zweiten Längsabschnitts (39) kleiner als der Innendurchmesser des weiblichen Kupplungselements (5) ist.

16. Kupplungseinrichtung nach Anspruch 9, **dadurch gekennzeichnet**, daß der zweite Längsabschnitt (39) der Löseeinrichtung (35) einen sich radial erstreckenden Vorsprung (45) aufweist, der als Rastelement mit einer im weiblichen Kupplungselement (5) vorgesehenen Nut (21) zusammenwirkt, derart, daß das Dichtelement (43) gegen die Stirnseite (41) gedrückt wird.

17. Kupplungseinrichtung nach Anspruch 9, **dadurch gekennzeichnet**, daß der zweite Längsabschnitt (39) radial aufweitbar ausgebildet ist.

18. Kupplungseinrichtung nach Anspruch 11, **dadurch gekennzeichnet**, daß der zweite Längsabschnitt (39) in axialer Richtung verlaufende Schlitze aufweist.
